(19) **Europäisches Patentamt**

**European Patent Office**

**Office européen des brevets**

(11) **EP 1 063 440 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
***F16D 48/06*** *(2006.01)*

(21) Anmeldenummer: **00112937.8**

(22) Anmeldetag: **20.06.2000**

(54) **Verfahren zur Regelung einer automatisierten Kupplung**

Method for controlling an automatic clutch

Méthode de réglage d'un embrayage automatisé

(84) Benannte Vertragsstaaten:
**AT BE CH CY DE DK ES FI FR GB GR IE IT LI LU MC NL PT SE**

(30) Priorität: **22.06.1999 DE 19928538**

(43) Veröffentlichungstag der Anmeldung:
**27.12.2000 Patentblatt 2000/52**

(73) Patentinhaber: **Volkswagen Aktiengesellschaft**
**38436 Wolfsburg (DE)**

(72) Erfinder: **Bothe, Edgar**
**31224 Peine (DE)**

(74) Vertreter: **Hübsch, Dirk et al**
**Hübsch & Weil**
**Patent- und Rechtsanwaltskanzlei**
**Ubierring 43**
**50678 Köln (DE)**

(56) Entgegenhaltungen:
**DE-A- 19 751 455    US-A- 3 905 459**
**US-A- 4 624 349**

EP 1 063 440 B1

**Beschreibung**

Die Erfindung betrifft ein Verfahren zur Regelung einer automatisierten Kupplung gemäß dem Oberbegriff des Patentanspruches 1.

Zur automatisierten Regelung von Kupplungen werden Betriebseigenschaften der Kupplung bei verschiedenen Betriebszuständen in Form einer Kennlinie gespeichert. Diese beschreibt den Zusammenhang zwischen einer den Zustand der Kupplung charakterisierenden Regelgröße und einer den Zustand der Kupplung beeinflussenden Stellgröße.

Die Ermittlung einer individuellen Kennlinie für eine Kupplung ist sehr aufwendig.

Bei gekrümmten oder abgeknickten Kennlinien ist außerdem der Speicherplatzbedarf für eine vollständige Speicherung aller Werte der Kennlinie sehr hoch. Man versucht deshalb, die Kennlinie durch eine oder mehrere Geradenabschnitte anzunähern. Diese lassen sich dann aus wenigen gespeicherten Punkten berechnen.

US 5.105.922 beschreibt eine hydraulische Kupplung mit einer gekrümmten und geknickten Kennlinie. DE 2 244 919 beschreibt ebenfalls eine hydraulische Kupplung, welche eine aus zwei Geradenabschnitte zusammengesetzte Kennlinie besitzt. Eine Methode zu ihrer Ermittlung ist jedoch nicht beschrieben.

So ist im Stand der Technik weiterhin ein Verfahren bekannt (DE 197 51 455 A), bei der eine Kennlinie als Ganzes adaptiert bzw. verschoben wird, indem sich die Verschiebung der Kennlinie als Ganzes an Bereichsschwerpunkten orientiert. Weiterhin ist ein Verfahren bekannt (US-A-3 905 459), bei dem ein Kolben für eine Kupplung immer nach einer Bewegung über eine bestimmte Strecke auf spezifische Art und Weise angesteuert wird. Schließlich sind allgemeine weitere Adaptionsverfahren im Stand der Technik bekannt, bei denen eine lineare Interpolation zwischen zwei Punkten erfolgt ("AS Guru Maths- Linear Interpolation-BBC Education").

Der vorliegenden Erfindung liegt das Problem zugrunde, das Verfahren derart weiterzubilden, dass bei einem Verfahren zur Regelung einer automatisierten Kupplung eine einfache und genaue Approximation der Kennlinie ermöglicht wird.

Durch Ermittlung der beiden Eichpunkte und ihrer Verbindungsgeraden läßt sich der zweite Kennlinienteilabschnitt schnell und speichersparend definieren. Eine Begrenzung der Approximation der Kennlinie durch die Verbindungsgerade auf denjenigen Teil der Verbindungsgeraden ab dem Schnittpunkt, der die beiden Eichpunkte beinhaltet, liefert die gewünschten Werte im zu bestimmenden Bereich und erhält die genauere Approximierung der Kennlinie durch den bereits bestimmten ersten Kennlinienteilabschnitt.

Eine besonders hohe Genauigkeit ergibt sich, wenn der erste Eichwert der Stellgröße der maximale Wert der Stellgröße ist. Dadurch ist der Abstand zwischen den beiden Eichpunkten so groß wie möglich.

Um geringen Speicherbedarf und gleichzeitig eine hohe Genauigkeit der Kennlinie zu erhalten, ist es günstig, wenn der erste Kennlinienteilabschnitt durch einen Teilabschnitt einer weiteren Gerade angenähert ist.

Eine Approximation der Kennlinie durch drei oder mehr Teilabschnitte kann zu einer verbesserten Genauigkeit beitragen.

Die Regelung einer automatisierten Kupplung, insbesondere einer elektronisch gesteuerten Fahrzeugkupplung, mit einer Regeleinrichtung, die in Abhängkeit von einer den Zustand der Kupplung charakterisierenden Regelgröße den Wert einer den Zustand der Kupplung beeinflussenden Stellgröße bestimmt und die zur Bestimmung der Stellgröße auf eine Kennlinie zurückgreift, welche einen nichtlinearen Zusammenhang von Stellgröße und Regelgröße beschreibt, erfolgt durch die Approximation der Kennlinie durch das bereits den beschriebene Verfahren. Dies ermöglicht eine einfache Einstellung der Kupplungscharakteristika. Dadurch können die bei der Kupplungsfertigung einzuhaltenden Toleranzen weniger streng gehandhabt werden, da eine individuelle Einstellung jeder Kupplung ermöglicht ist.

Eine leichte Erfaßbarkeit der Regelgröße ergibt sich, wenn bei einer hydraulischen Kupplung der Druck der Hydraulikflüssigkeit als Regelgröße dient.

Zur einfachen elektronischen Regelung des Drucks der Hydraulikflüssigkeit mittels elektromagnetischer Proportionalventile ist es zweckmäßig, daß bei einer Regelung des Drucks der Hydraulikflüssigkeit mittels elektromagnetischer Proportionalventile deren elektrischer Versorgungsstrom als Stellgröße dient.

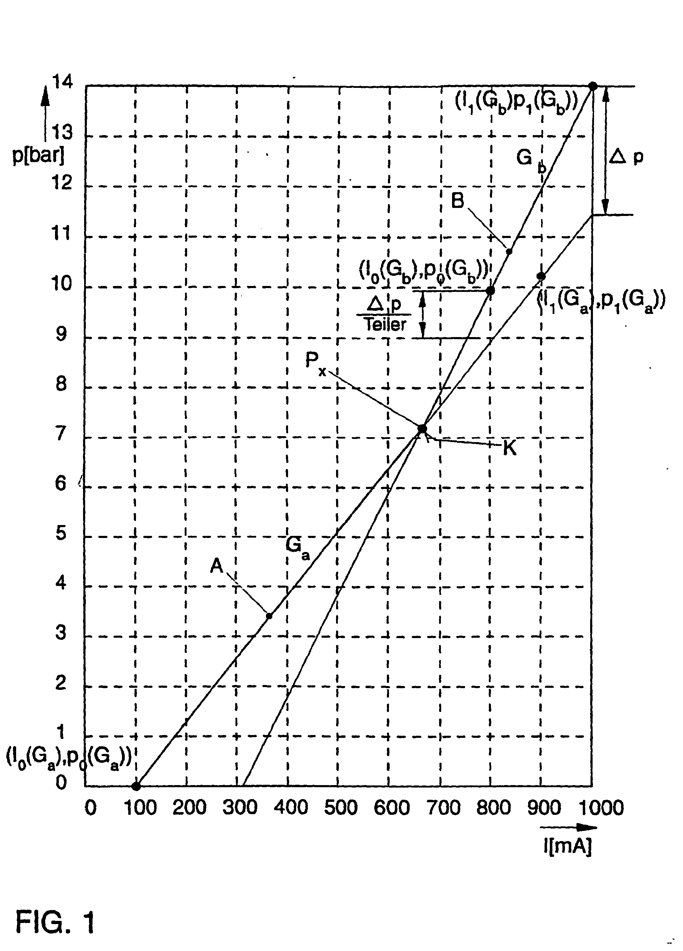

Die nachfolgenden Ausführungen dienen einer beispielhaften Veranschaulichung der Erfindung. Die Beschreibung nimmt dabei Bezug auf die Figur, die eine Kennlinie einer hydraulisch geregelten Kupplung zeigt.

In der Figur ist in einem Koordinatensystem ein nichtlinearer Zusammenhang zwischen einem elektrischen Strom I eines Proportionalventils einer Kupplung als Stellgröße und einem hydraulischen Kupplungsdruck p als Regelgröße dargestellt. Eine Vielzahl von einzelnen Meßwerten, die durch eine wolkenartige Gruppe einzelner Punkte angedeutet sind, ist hier angenähert durch eine Kennlinie. Diese Kennlinie ist gebildet aus einem Teilabschnitt B einer Geraden $G_b$ und einem Teilabschnitt A einer zweiten Geraden $G_a$. Die beiden Teilabschnitte A und B sind an einem Schnittpunkt $P_x$ miteinander verbunden. An dieser Stelle weist die Kennlinie einen Knick K auf.

Die Gerade $G_a$ ist im vorliegenden Ausführungsbeispiel als Verbindungsgerade eines unteren Definitionspunktes $(I_0(G_a), p_0(G_a))$ und eines oberen Definitionspunktes $(I_1(G_a), p_1(G_a))$ definiert und wird als bekannt vorausgesetzt.

Zur Bestimmung des zweiten Teilabschnittes B der Kennlinie wird die Kupplung in eine Fahrsituation gebracht, in der die Kupplungskapazität größer ist als das zu übertragende Moment, also z.B. beim Fahren in Überanpressung.

Dann wird der Strom I des Proportionalventils auf einen ersten Eichwert $I_1(G_b)$, der im zu bestimmenden Wertebereich liegt, eingestellt. Diesem Wert ist im Koordinatensystem ein erster Eichpunkt $(I_1(G_b), p_1(G_b))$ zugeordnet, der nicht auf der Geraden $G_a$ liegt, also zum Kennlinienteilabschnitt A beabstandet ist. An diesem ersten Eichpunkt $(I_1(G_b), p_1(G_b))$ wird der Wert $p_1(G_b)$ des Kupplungsdruckes p gemessen und so die Koordinaten des ersten Eichpunktes bestimmt.

Vorzugsweise entspricht der erste Eichwert $I_1(G_b)$, wie im vorliegenden Beispiel dargestellt, dem Wert des maximal möglichen Stromes I. Dadurch läßt sich die größtmögliche Länge des Teilabschnittes B und somit die größte Genauigkeit erzielen.

Anschließend wird der Wert des Stromes I auf einen zweiten Eichwert $I_0(G_b)$, der ebenfalls im zu bestimmenden Wertebereich liegt, eingestellt und der Wert $p_0(G_b)$ des Kupplungsdruckes p am zweiten Eichpunkt $(I_0(G_b), p_0(G_b))$ gemessen. Der zweite Eichpunkt $(I_0(G_b), p_0(G_b))$ liegt ebenfalls nicht auf der Geraden $G_a$ und ist somit zum ersten Kennlinienteilabschnitt A beabstandet. Auch der Abstand zum ersten Eichpunkt $(I_1(G_b), p_1(G_b))$ sollte möglichst groß sein, um eine möglichst hohe Genauigkeit der Approximation zu erreichen.

Beide Eichpunkte sind zum Zwecke einer möglichst genauen Annäherung des tatsächlichen Verlaufes der Kennlinie durch den Kennlinienteilabschnitt B deutlich gegenüber der Geraden $G_a$ beabstandet.

Aus den beiden Eichpunkten läßt sich nun ihre Verbindungsgerade $G_b$ bestimmen. Hieraus läßt sich ein Schnittpunkt $P_x$ errechnen, an welchem die Verbindungsgerade $G_b$ die Gerade $G_a$ und somit den ersten Kennlinienteilabschnitt A kreuzt.

Eine optimale Annäherung der Kennlinie durch die Gerade $G_b$ ist in der Hälfte der Verbindungsgerade $G_b$ ab dem Schnittpunkt $P_x$ gegeben, die die beiden Eichpunkte beinhaltet.

Der Abschnitt kann begrenzt werden beispielsweise durch einen der beiden Eichpunkte oder durch einen minimal bzw. maximal möglichen Wert der Stellgröße. Im vorliegenden Fall ist der Kennlinienteilabschnitt B zur einen Seite begrenzt durch den Schnittpunkt $P_x$ und zur anderen Seite durch den ersten Eichpunkt $(I_1(G_b), p_1(G_b))$.

Mathematisch läßt sich das Verfahren folgendermaßen beschreiben:

Die Differenz $\Delta p$ zwischen dem gemessenen Wert $p_1(G_b)$ der Regelgröße am ersten Eichpunkt $(I_1(G_b), p_1(G_b))$ und dem rechnerischen Wert $p_1(G_a)$ auf der Geraden $G_a$ entspricht:

$$\Delta p = p_1(G_b) + p_0(G_a) - \frac{(p_1(G_a) - p_0(G_a)) \cdot ((I_1(G_b) - I_0(G_a))}{(I_1(G_a) - I_0(G_a))}$$

Der Wert $p_0(G_b)$ des Kupplungsdruckes am zweiten Eichpunkt entspricht:

$$p_0(G_b) = p_0(G_a) + \frac{\Delta p}{\text{Teiler}} - \frac{(p_1(G_a) - p_0(G_a)) \cdot ((I_0(G_b) - I_0(G_a))}{(I_1(G_a) - I_0(G_a))}$$

Dabei wird der zweite Eichpunkt an der Stelle bestimmt, an der der Abstand $\Delta p$/Teiler zur Geraden $G_a$ einen applizierbaren Teil der Abweichung bei Maximalansteuerung erreicht.

Zur Approximation einer geknickten oder einer lokal gekrümmten Kennlinie kann der Teilabschnitt B der Kennlinie zwischen dem Knick K und dem maximalen Wert $I_1(G_b)$ des Stromes nach folgender Verfahrensvariante bestimmt werden.

Zunächst wird der Strom I auf den maximalen Wert $(I_1(G_b))$ eingestellt, und der Wert $p_1(G_b)$ des Kupplungsdruckes p am ersten Eichpunkt $(I_1(G_b), p_1(G_b))$ ermittelt.

Dann wird der Strom auf einen zweiten Eichwert $I_0(G_b)$ eingestellt und der Wert $p_0(G_b)$ des Kupplungsdruckes p beim zweiten Eichpunkt $(I_0(G_b), p_0(G_b))$ gemessen. Der zweite Eichpunkt $(I_0(G_b), p_0(G_b))$ ist dabei zum Knick K einerseits und zum ersten Eichpunkt $(I_1(G_b), p_1(G_b))$ andererseits möglichst deutlich beabstandet, um Ungenauigkeiten zu minimieren.

Aus der Verbindungsgeraden $G_b$ des ersten und des zweiten Eichpunktes wird dann der Kennlinienteilabschnitt B bestimmt. Dabei wird der Teilabschnitt der Verbindungsgerade $G_b$ gewählt, der zwischen dem Knick K und dem ersten Eichpunkt $(I_1(G_b), p_1(G_b))$ liegt.

Statt einer Approximation der Kennlinie durch einen oder zwei Teilabschnitte ist auch eine Annäherung durch drei oder mehr Teilabschnitte denkbar.

**Patentansprüche**

1. Verfahren zur Regelung einer automatisierten Kupplung, insbesondere einer elektronisch gesteuerten Fahrzeugkupplung, mit einer Regeleinrichtung, die in Abhängigkeit von einer den Zustand der Kupplung charakterisierenden Regelgröße (p) den Wert einer den Zustand der Kupplung beeinflussenden Stellgröße (1) bestimmt und die zur Bestimmung der Stellgröße (l) auf eine Kennlinie zurückgreift, welche einen nichtlinearen Zusammenhang von Stellgröße (l) und Regelgröße (p) beschreibt und einen ersten Kennlinienteilabschnitt (A) und einen zweiten Kennlinienteilabschnitt (B) mit einem Knick (K) bzw. einem Schnittpunkt (Px) zwischen diesen Kennlinienteilabschnitten (A, B) aufweist, **dadurch gekennzeichnet, dass** der zweite Kennlinienteilabschnitt (B) bestimmt, nämlich approximiert wird durch:

   (a) Einstellen der Stellgröße (I) auf einen ersten Eichwert ($I_1(G_b)$) an einem ersten Eichpunkt ($I_1(G_b)$, $p_1(G_b)$), der zum ersten Kennlinienteilabschnitt (A) beabstandet ist,
   (b) Messen des Wertes $p_1(G_b)$ der Regelgröße (p) am ersten Eichpunkt ($I_1(G_b)$, $p_1(G_b)$),
   (c) Einstellen der Stellgröße (I) auf einen zweiten Eichwert ($I_0(G_b)$) an einem zweiten Eichpunkt ($I_0(G_b)$, $p_0(G_b)$), der zum ersten Kennlinienteilabschnitt (A) und zum ersten Eichpunkt ($I_1(G_b)$, $p_1(G_b)$) beabstandet ist,
   (d) Messen des Wertes ($p_0(G_b)$) der Regelgröße (p) beim zweiten Eichpunkt ($I_0(G_b)$, $p_0(G_b)$),
   (e) Bestimmen einer Verbindungsgeraden ($G_b$), die den ersten und den zweiten Eichpunkt miteinander verbindet,
   (f) Bestimmen eines Schnittpunktes ($P_x$), an dem die Verbindungsgerade ($G_b$) den ersten Kennlinienteilabschnitt (A) kreuzt,
   (g) Bestimmen des zweiten Kennlinienteilabschnittes (B) als denjenigen Teil der Verbindungsgeraden ($G_b$) ab dem Schnittpunkt ($P_x$), der die beiden Eichpunkte beinhaltet.

2. Verfahren nach Anspruch 1, **dadurch gekennzeichnet, dass** der erste Eichwert ($I_1(G_b)$) der Stellgröße (I) der maximale Wert der Stellgröße (I) ist.

3. Verfahren nach Anspruch 1 oder 2, **dadurch gekennzeichnet, dass** der Kennlinienabschnitt (A) durch einen Abschnitt einer zweiten Gerade ($G_a$) angenähert ist.

4. Verfahren nach einem der vorangehenden Ansprüche, **dadurch gekennzeichnet, dass** die Kennlinie durch drei oder mehr Kennlinienteilabschnitte approximiert wird.

5. Verfahren nach einem der vorhergehenden Ansprüche, **dadurch gekennzeichnet, dass** bei einer hydraulischen Kupplung der Druck der Hydraulikflüssigkeit als Regelgröße dient.

6. Verfahren nach Anspruch 5, **dadurch gekennzeichnet, dass** bei einer Regelung des Drucks der Hydraulikflüssigkeit mittels elektromagnetischer Proportionalventile deren elektrischer Versorgungsstrom als Stellgröße dient.

**Claims**

1. Method for controlling an automatic clutch, in particular an electronically controlled vehicle clutch, having a control device which, as a function of a controlled variable (p) which characterizes the state of the clutch, determines the value of a manipulated variable (1) which influences the state of the clutch and which accesses a characteristic curve in order to determine the manipulated variable (1), said characteristic curve describing a nonlinear relationship of the manipulated variable (1) and controlled variable (p) and having a first characteristic curve section (A) and a second characteristic curve section (B) with a bend (K) or a point of intersection (Px) between these characteristic curve sections (A, B), **characterized in that** the second characteristic curve section (B) is determined, specifically approximated, by:

   (a) setting the manipulated variable (1) to a first calibrated value ($I_1(G_b)$) at a first calibration point ($I_1(G_b)$, $p_1(G_b)$) which is spaced apart from the first characteristic curve section (A),
   (b) measuring the value $p_1(G_b)$ of the controlled variable (p) at the first calibration point ($I_1(G_b)$, $p_1(G_b)$),
   (c) setting the manipulated variable (1) to a second calibrated value ($I_0(G_b)$) at a second calibration point ($I_0$

$(G_b)$, $p_0(G_b)$) which is spaced apart from the first characteristic curve section (A) and the first calibration point $(I_1(G_b)$, $p_1(G_b))$,

(d) measuring the value $(p_0(G_b))$ of the controlled variable (p) at the second calibration point $(I_0(G_b)$, $(p_0(G_b))$,

(e) determining a connecting straight line $(G_b)$ which connects the first and second calibration points to one another,

(f) determining a point of intersection (Px) at which the connecting straight line $(G_b)$ intersects the first characteristic curve section (A), and

(g) determining the second characteristic curve section (B) as that part of the connecting straight line $(G_b)$ from the point of intersection (Px) which includes the two calibration points.

2. Method according to Claim 1, **characterized in that** the first calibration value $(I_1(G_b))$ of the manipulated variable (1) is the maximum value of the manipulated variable (1).

3. Method according to Claim 1 or 2, **characterized in that** the characteristic curve section (A) is approximated by a section of a second straight line $(G_a)$.

4. Method according to one of the preceding claims, **characterized in that** the characteristic curve is approximated by three or more characteristic curve sections.

5. Method according to one of the preceding claims, **characterized in that** in a hydraulic clutch the pressure of the hydraulic fluid serves as the controlled variable.

6. Method according to Claim 5, **characterized in that** when the pressure of the hydraulic fluid is controlled by means of electromagnetic proportional valves their electrical supply current serves as the manipulated variable.


**Revendications**

1. Procédé de régulation d'un embrayage automatisé, en particulier d'un embrayage de véhicule à commande électronique, avec un équipement de régulation qui, en fonction d'une variable réglée (p) caractérisant l'état de l'embrayage, détermine la valeur d'une variable réglante (1) agissant sur l'état de l'embrayage, et qui pour déterminer la variable réglante (1) fait appel à une courbe caractéristique qui décrit une relation non linéaire entre la variable réglante (1) et la variable réglée (p) et présente un premier tronçon (A) de courbe caractéristique et un deuxième tronçon (B) de courbe caractéristique avec une inflexion (K) ou encore un point d'intersection $(P_x)$ entre ces tronçons (A, B) de courbe caractéristique, **caractérisé en ce que** le deuxième tronçon (B) de courbe caractéristique est déterminé par approximation en :

(a) réglant la variable réglante (1) à une première valeur d'étalonnage $(I_1(G_b))$ en un premier point d'étalonnage $(I_1(G_b)$, $p_1(G_b))$ qui est distant du premier tronçon (A) de courbe caractéristique,

(b) mesurant la valeur $(p_1(G_b)$ de la variable réglée (p) au premier point d'étalonnage $(I_1(G_b)$, $p_1(G_b))$,

(c) réglant la variable réglante (1) à une deuxième valeur d'étalonnage $(I_0(G_b))$ en un deuxième point d'étalonnage $(I_0(G_b)$, $p_0(G_b))$ qui est distant du premier tronçon (A) de courbe caractéristique et du premier point d'étalonnage $(I_1(G_b)$, $p_1(G_b))$,

(d) mesurant la valeur $(p_0(G_b))$ de la variable réglée (p) au deuxième point d'étalonnage $(I_0(G_b)$, $p_0(G_b))$,

(e) déterminant une droite de jonction $(G_b)$ qui relie entre eux le premier et le deuxième point d'étalonnage,

(f) déterminant un point d'intersection $(P_x)$ où la droite de jonction $(G_b)$ coupe le premier tronçon (A) de courbe caractéristique,

(g) déterminant le deuxième tronçon (B) de courbe caractéristique comme la partie de la droite de jonction $(G_b)$ qui débute au point d'intersection $(P_x)$ et contient les deux points d'étalonnage.

2. Procédé selon la revendication 1, **caractérisé en ce que** la première valeur d'étalonnage $(I_1(G_b))$ de la variable réglante (1) est la valeur maximale de la variable réglante (1).

3. Procédé selon la revendication 1 ou 2, **caractérisé en ce que** le tronçon (A) de courbe caractéristique est approché par un tronçon d'une deuxième droite $(G_a)$.

4. Procédé selon l'une quelconque des revendications précédentes, **caractérisé en ce que** la courbe caractéristique est déterminée par approximation par trois tronçons de courbe caractéristique ou davantage.

**5.** Procédé selon l'une quelconque des revendications précédentes, **caractérisé en ce que**, pour un embrayage hydraulique, la pression du liquide hydraulique sert de variable réglée.

**6.** Procédé selon la revendication 5, **caractérisé en ce que**, pour une régulation de la pression du liquide hydraulique au moyen de distributeurs proportionnels électromagnétiques, leur courant d'alimentation électrique sert de variable réglante.

FIG. 1